# EUROPEAN PATENT APPLICATION

(11) **EP 2 674 894 A2**
(43) Date of publication of application: **18.12.2013**
(21) Application number: 13170425.6
(22) Date of filing: 04.06.2013
(51) Int. Cl.: G06K 9/32

(54) **Detection of camera misalignment**

(30) Priority: 15.06.2012 US 201213524404
(71) Applicant: Palo Alto Research Center Incorporated, Palo Alto, California 94304 (US)
(72) Inventor: Price, Robert R., Palo Alto, CA California 94306 (US); Raghavan, Ajay, Mountain View, CA California 94040 (US); Liu, Juan, Cupertino, CA 95014 (US)
(74) Representative: Lord, Michael

(57) **Abstract**

A camera system **(10)** includes: a camera **(12)** that obtains a test image **(200);** and an image processor **(30).** The image processor **(30):** analyzes said test image **(200)** to detect an object **(22)** appearing in the test image **(200);** determines a location where the detected object **(22)** appears in the test image **(200);** compares the determined location with a reference location; and determines if the camera **(12)** is one of properly aligned or misaligned based upon a result of said comparison.

## Description

### BACKGROUND

The present inventive subject matter relates generally to the art of automated and/or unmanned cameras. Particular but not exclusive relevance is found in connection with red light and/or other traffic enforcement cameras. Accordingly, the present specification makes specific reference thereto. It is to be appreciated however that aspects of the present inventive subject matter are also equally amenable to other like applications.

To capture high quality images with red light, traffic enforcement and/or other like automated and/or unattended cameras it is commonly desirable to have the camera properly aligned, e.g., so as to be aimed and/or pointed in a direction where objects of interest may be located. For example, red light cameras are commonly aimed at or pointed in a direction of intersections having traffic going there through which is regulated by one or more traffic signals. Over time, such an automated and/or unmanned camera may become misaligned, e.g., due to wind or other environmental conditions changing the alignment of the camera, unauthorized tampering with the camera's alignment, accidental misalignment during installation and/or maintenance of the camera, etc. When the camera is misaligned, objects of interest, e.g., such as vehicles, drivers and/or license plates, may not be accurately visualized and/or identifiable in images captured by the camera. For example, accurate visualization and/or identification of such objects in captured images are often important for law enforcement purposes and/or the issuing of traffic citations.

Camera misalignment results in the camera not being aimed or pointed in a desired direction. In turn, one or more objects of interest otherwise sought to be captured in an image obtained by the camera may not be in the camera's field-of view (FoV) or may not be sufficiently visualized and/or readily identifiable in the image. Accordingly, law enforcement or other actions reliant on accurate visualization and/or identification of one or more target objects in a captured image may be frustrated. Moreover, some more advance camera systems may be triggered to capture an image in response to events occurring in a scene observed by the camera, e.g., such as the detection of a vehicle or vehicle movement within the scene. Where such an event is not observed by a misaligned camera, the camera may not capture an otherwise desired image because the event was not detected.

Traditionally, operators of automated/unattended cameras such as those mentioned above relied on human labor-intensive practices to monitor, check and/or verify proper camera alignment. For example, an operator may periodically or intermittently conduct a manual review of images obtained from a camera and visually inspect them for proper framing. Such an operator may commonly be assigned a significant number of cameras to check on a fairly frequent basis. Accordingly, such a process can be repetitive and prone to human oversight and/or error. Additionally, a maintenance technician may be assigned to manually inspect camera installations in the field at periodic or intermittent intervals. Again, this is a labor-intensive process prone to human oversight and/or error.

Accordingly, a new and/or improved method, system and/or apparatus for monitoring, detecting and/or reporting misalignment of a camera is disclosed which addresses the above-referenced problem(s) and/or others.

### SUMMARY

In accordance with one embodiment, a method is provided for detecting misalignment of a camera from a test image captured by the camera. The method includes: analyzing the test image to detect an object appearing in the test image; determining a location where the detected object appears in the test image; comparing the determined location with a reference location; and determining if the camera is one of properly aligned or misaligned based upon a result of said comparison.

In accordance with another embodiment, a camera system includes: a camera that obtains a test image; and an image processor. The image processor: analyzes said test image to detect an object appearing in the test image; determines a location where the detected object appears in the test image; compares the determined location with a reference location; and determines if the camera is one of properly aligned or misaligned based upon a result of said comparison.

### BRIEF DESCRIPTION OF THE DRAWING(S)

FIGURE **1** is a diagrammatic illustration showing an exemplary camera system suitable for practicing aspects of the present inventive subject matter.

FIGURE **2** is a diagrammatic illustration showing an exemplary training image usable for practicing aspects of the present inventive subject matter.

FIGURE **3** is a flow chart illustrating an exemplary process for analyzing an image in accordance with aspects of the present inventive subject matter.

FIGURE **4** is an illustration showing an exemplary image suitable for analysis in accordance with aspect of the present inventive subject matter.

### DETAILED DESCRIPTION OF THE EMBODIMENT(S)

For clarity and simplicity, the present specification shall refer to structural and/or functional elements, relevant standards and/or protocols, and other components that are commonly known in the art without further detailed explanation as to their configuration or operation except to the extent they have been modified or altered in accordance with and/or to accommodate the preferred embodiment(s) presented herein.

Generally, the present specification describes a method, process, apparatus and/or system for detecting misalignment of a camera, e.g., such as a red light or other traffic enforcement camera or other suitable automated or unmanned camera or the like. In practice, the described method, process, apparatus and/or system analyzes images obtained by a camera to automatically detect one or more elements or objects appearing in the captured image. Suitably, the elements or objects detected in the analyzed image are generally static and/or substantially immobile in nature, e.g., at least relative to the camera. Camera misalignment is then determined by comparing the locations where the detected elements/objects appear in the capture image to known or reference locations where the elements/objects should appear when the camera is properly aligned. If the locations where the detected elements/objects appear in the analyzed image substantially match or are otherwise sufficiently the same as the known or reference locations, then the camera is deemed to be properly aligned. Otherwise, if the locations where the detected elements/objects appear in the analyzed image substantially depart or are sufficiently different from the known or reference locations, then the camera is deemed to be out of alignment. In practice, the substantially static scene elements or objects detected may include without limitation: a red or other light of a traffic signal; a stop sign or other traffic sign; a roadway lane marker or divider or the like; a tollbooth; etc.

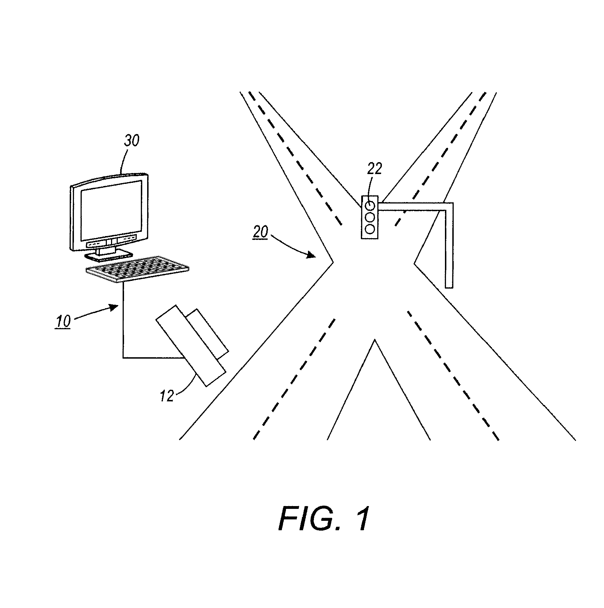

With reference now to FIGURE **1**, an automated and/or unattended camera system 10 includes a camera 12 for selectively capturing and/or obtaining an image of a scene 20 within the camera's FoV. In practice, the camera 12 may be a digital camera and may be either a still picture camera or a video camera. When referring herein to a captured or otherwise obtained image from the camera 12, it is intended to mean an image from a picture camera or a still frame from a video camera.

As shown in FIGURE **1**, the camera 12 is generally aimed at and/or pointed in the direction of the scene 20 which contains at least one element or object 22 that is generally static and/or substantially immobile, e.g., at least relative to a position of the camera 12. In the illustrated example, the scene 20 at which the camera 12 is aimed and/or pointed is a traffic intersection and the element or object 22 is a light (e.g., a red light) of a traffic signal. Alternately, however, it is to be appreciated that in practice other scenes may be the subject of interest (e.g., a toll collection site) and/or other generally static elements and/or objects may be employed (e.g., a tollbooth, a stop sign or other traffic sign, a roadway lane marker or divider, etc.).

In the illustrated embodiment, the system 10 further includes a computer 30 or the like that is remotely or otherwise in communication with the camera 12. Suitably, the computer 30 obtains or otherwise receives and analyzes images captured by the camera 12 in order to automatically monitor, detect and/or report misalignment of the camera 12. In practice, the image obtained or received and analyzed by the computer 30 is a digital image, e.g., captured by a digital camera. Optionally, the computer 30 may receive an analog feed which is in turn digitized to obtain a digital image for analysis. In one suitable embodiment, the computer 30 obtains or receives and analyzes essentially all the images captured by the camera 12. Alternately, the computer 30 may obtain or receive and analyze a representative sample or other subset of the images captured by the camera 12 at periodic or intermittent intervals or otherwise chosen times. Suitably, the images may be transmitted from the camera 12 to the computer 30 and/or analyzed in real time or near real time or in batches or otherwise.

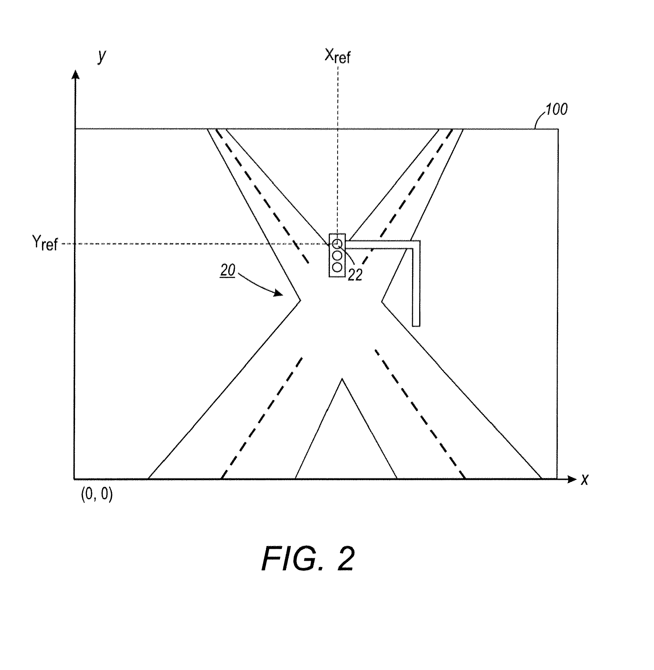

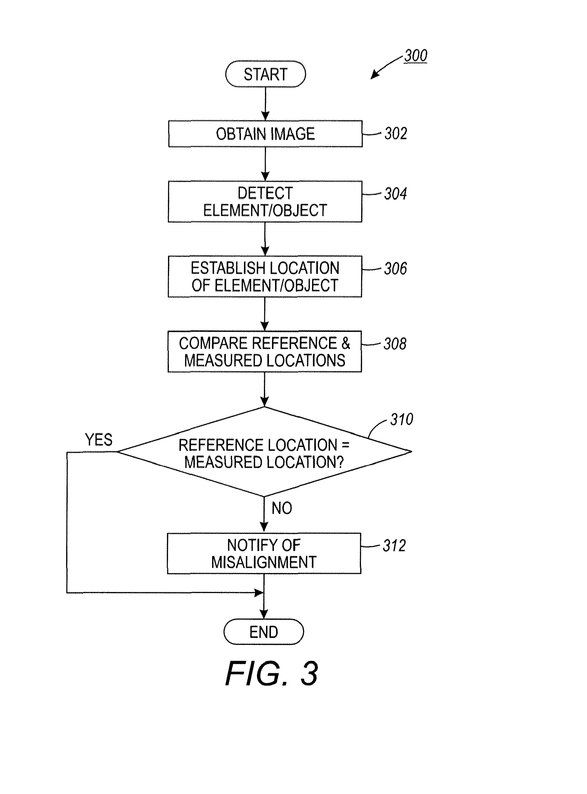

With reference now to FIGURE **2****,** there is shown an exemplary training or reference image 100 of the scene 20 captured by the camera 12 while the camera is known to be properly aligned (e.g., at or near the time of installation). In this case, the element or object 22 appears in the image 100 at a given location which shall be taken and/or referred to as the reference location. Suitably, the reference location may be defined by a set of respective coordinates, e.g., such as (X_{ref}, Y_{ref}), or otherwise quantified. In this way, the reference location may be established using the reference image 100. For example, the reference image 100 may be analyzed using a process or method (e.g., the same as or similar to the one described below with respect to FIGURE **3**) to automatically detect the element/object 22 in the reference image 100 and/or to automatically determine the location where the element/object 22 appears in the reference image 100. The location thus determined may then be electronically stored or saved or otherwise established as the reference location. Alternately, the reference location may established manually, e.g., by entry of known coordinates or the like defining where the element/object 22 should appear in an image captured by the camera 12 when it is properly aligned.

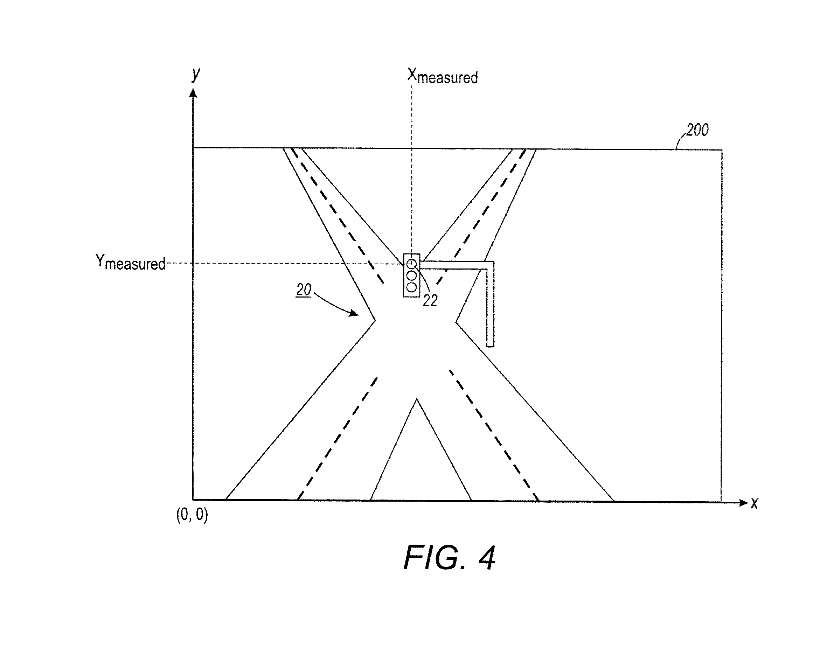

With reference now to FIGURE **3****,** there is shown a flow chart illustrating an exemplary method and/or process 300 by which obtained or captured images are analyzed, e.g., by the computer 30. For purposes of the present example, reference is also made to FIGURE **4** which shows an exemplary test image 200 captured by the camera 12 and that may be so analyzed. In this example, the test image was captured while the camera 12 was out of alignment or misaligned. As shown, the test image 200 captured by the camera 12 also includes generally the scene 20 and the element or object 22 therein. Suitably, the test image 200 is analyzed, e.g., using the method and/or process 300, to automatically detect the element/object 22 in the test image 200 and determine a location where the detected element/object 22 appears in the test image 200. Suitably, similar to the reference location, the determined location where the element/object 22 appears in the test image 200 (nominally referred to herein as the measured location) may be defined by a set of respective coordinates, e.g., such as (X_{measured}, Y_{measured}), or otherwise quantified. In turn, whether or not the camera 12 is in proper alignment or is misaligned is determined by comparing the measured location where the element/object 22 appears in the test image 200 to the reference location. If the measured and reference locations substantially match one another or are otherwise sufficiently the same (e.g., within some given tolerance or threshold), then the camera 12 is deemed to be properly aligned or in alignment. Otherwise, if the measured and reference locations substantially depart from one another or are sufficiently different (e.g., outside some given tolerance or threshold), then the camera 12 is deemed to be out of alignment or misaligned.

As shown in step 302, an image is obtained. For example, the image 200 may be captured by the camera 12 and transmitted to the computer 30 for analysis.

At step 304, the image 200 is analyzed to detect the element or object 22 therein. Suitably, this analysis may include segmenting the image 200 and searching within a given image segment for the element or object 22 being detected. Optionally, for example where the element/object 22 is a light of a traffic signal, the searched segment may be an upper portion of the image 200, e.g., such as the top quarter. In one embodiment, the search may be executed by scanning the pixels of the image to look for patches or collections of pixels or the like having parameters or values (e.g., color, intensity, size, shape, etc.) sufficiently matching characteristic and/or features of the element/object being sought. For example, where the element or object 22 being sought is a red light of a traffic signal, the image 200 or image segment can be searched for an essentially circular red patch or collection of pixels having a suitable size. Suitably, a scale invariant feature transform (SIFT) may be used to extract, identify and/or detect features of the image 200 corresponding to the element/object 22 being sought.

At step 306, the location where the detected element or object 22 appears in the image 200 is determined and/or otherwise established as the measured location. Suitably, the determined location where the detected element/object 22 appears in the test image 200 (nominally referred to herein as the measured location) may be defined by a set of respective coordinates, e.g., such as (X_{measured}, Y_{measured}), or otherwise quantified.

At step 308, the measured and reference locations are compared. For example, the X and Y coordinates of the respective locations may be compared.

At decision step 310, if the measured and reference locations substantially match one another or are otherwise sufficiently the same (e.g., within some given tolerance or threshold), then the camera 12 is deemed to be properly aligned or in alignment and the process 300 may end. Otherwise, if the measured and reference locations substantially depart from one another or are sufficiently different (e.g., outside some given tolerance or threshold), then the camera 12 is deemed to be out of alignment or misaligned and the process may continue to step 312. Suitably, an absolute value of the difference between the measured and reference locations may be compared to a threshold. If the absolute value of the difference is less than (or optionally less than or equal to) the threshold, then the camera 12 is deemed to be in alignment, otherwise if the absolute value of the difference is greater than or equal to (or optionally merely greater than) the threshold, then the camera 12 is deemed to be out of alignment.

At step 312, a suitable notification of the misalignment is provided. For example, the computer 30 may provide such a notification by way of a visual indication, audible signal, display or sending of a suitable message, activation of a humanly perceivable alert or alarm, etc.

It is to be appreciated that in connection with the particular exemplary embodiment(s) presented herein certain structural and/or function features are described as being incorporated in defined elements and/or components. However, it is contemplated that these features may, to the same or similar benefit, also likewise be incorporated in other elements and/or components where appropriate. It is also to be appreciated that different aspects of the exemplary embodiments may be selectively employed as appropriate to achieve other alternate embodiments suited for desired applications, the other alternate embodiments thereby realizing the respective advantages of the aspects incorporated therein.

It is also to be appreciated that any one or more of the particular tasks, steps, processes, analysis, methods, functions, elements and/or components described herein may suitably be implemented via hardware, software, firmware or a combination thereof. For example, the computer 30 may include a processor, e.g., embodied by a computing or other electronic data processing device, that is configured and/or otherwise provisioned to perform one or more of the tasks, steps, processes, analysis, methods and/or functions described herein. For example, the computer 30 or other electronic data processing device employed in the system 10 may be provided, supplied and/or programmed with a suitable listing of code (e.g., such as source code, interpretive code, object code, directly executable code, and so forth) or other like instructions or software or firmware (e.g., such as an application to perform and/or administer the processing and/or image analysis described herein), such that when run and/or executed by the computer or other electronic data processing device one or more of the tasks, steps, processes, analysis, methods and/or functions described herein are completed or otherwise performed. Suitably, the listing of code or other like instructions or software or firmware is implemented as and/or recorded, stored, contained or included in and/or on a non-transitory computer and/or machine readable storage medium or media so as to be providable to and/or executable by the computer or other electronic data processing device. For example, suitable storage mediums and/or media can include but are not limited to: floppy disks, flexible disks, hard disks, magnetic tape, or any other magnetic storage medium or media, CD-ROM, DVD, optical disks, or any other optical medium or media, a RAM, a ROM, a PROM, an EPROM, a FLASH-EPROM, or other memory or chip or cartridge, or any other tangible medium or media from which a computer or machine or electronic data processing device can read and use. In essence, as used herein, non-transitory computer-readable and/or machine-readable mediums and/or media comprise all computer-readable and/or machine-readable mediums and/or media except for a transitory, propagating signal.

Optionally, any one or more of the particular tasks, steps, processes, analysis, methods, functions, elements and/or components described herein may be implemented on and/or embodiment in one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the respective tasks, steps, processes, analysis, methods and/or functions described herein can be used.

Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate.

## Claims

1. A method for detecting misalignment of a camera from a test image captured by the camera, said method comprising:
analyzing the test image to detect an object appearing in the test image;
determining a location where the detected object appears in the test image;
comparing the determined location with a reference location; and
determining if the camera is one of properly aligned or misaligned based upon a result of said comparison.

2. The method of claim 1, wherein said reference location is established by:
analyzing a reference image obtained when the camera is properly aligned to detect the object appearing in the reference image; and
determining a location where the detected object appears in the reference image.

3. The method of claim 1 or claim 2, wherein if the determined and reference locations substantially match, then the camera is deemed to be properly aligned, otherwise if the determined and reference locations do not substantially match, then the camera is deemed to be misaligned.

4. The method of any of the preceding claims, wherein said analyzing comprises:
applying a scale invariant feature transform.

5. The method of any of the preceding claims, wherein said analyzing comprising:
segmenting the test image and searching a selected segment of the image for the object being detected.

6. The method of claim 5, wherein the selected segment comprises a top subregion of the test image.

7. The method of claim 6, wherein the subregion is a top quarter of the test image.

8. The method of any of the preceding claims, said method further comprising:
providing notification of a detected misalignment.

9. The method of any of the preceding claims, wherein said object is one of a traffic signal light, a traffic sign, a tollbooth or a roadway lane marker.

10. A non-transitory machine-readable medium including a computer program which when executed performs the method of any of the preceding claims.

11. A camera system comprising:
a camera that obtains a test image; and
an image processor that:
analyzes said test image to detect an object appearing in the test image;
determines a location where the detected object appears in the test image;
compares the determined location with a reference location; and
determines if the camera is one of properly aligned or misaligned based upon a result of said comparison.

12. The camera system of claim 11, wherein said reference location is established by:
analyzing a reference image obtained when the camera is properly aligned to detect the object appearing in the reference image; and
determining a location where the detected object appears in the reference image.

13. The camera system of claim 11 or claim 12, wherein if the determined and reference locations substantially match, then the camera is deemed to be properly aligned, otherwise if the determined and reference locations do not substantially match, then the camera is deemed to be misaligned.

14. The camera system of any of claims 11 to 13, wherein said analyzing comprising:
segmenting the test image and searching a selected segment of the image for the object being detected.

15. The camera system of claim 14, wherein the selected segment comprises a top subregion of the test image, preferably wherein the subregion is approximately a top quarter of the test image.
